# EUROPÄISCHE PATENTSCHRIFT

(11) **EP 0 612 770 B1**
(45) Veröffentlichungstag und Bekanntmachung des Hinweises auf die Patenterteilung: **28.05.1997**
(21) Anmeldenummer: 94102526.4
(22) Anmeldetag: 19.02.1994
(51) Int. Cl.: C08F 214/26, C09D 127/12, C08J 3/03, C08F 216/14

(54) **Feinteilige Dispersionen von thermoplastischen Fluorpolymeren**
Microparticular dispersions of thermoplastic fluoro polymers
Dispersions à particules fines des polymères fluorés thermoplastiques

(30) Priorität: 24.02.1993 DE 4305619
(43) Veröffentlichungstag der Anmeldung: 31.08.1994
(73) Patentinhaber: Dyneon GmbH, 84504 Burgkirchen (DE)
(72) Erfinder: Mayer, Ludwig, Dr., D-84489 Burghausen (DE); Löhr, Gernot, Dr., D-84508 Burgkirchen (DE)

(56) Entgegenhaltungen:
- EP-A- 0 193 963
- WO-A-80/00929
- GB-A- 689 801
- DATABASE WPI Week 9311, Derwent Publications Ltd., London, GB; AN 92-183637 & JP-A-5 032 729 (DAINIPPON) 9. Februar 1993 & WO-A-92 07886 (DAINIPPON) 14. Mai 1992
- DATABASE WPI Week 9311, Derwent Publications Ltd., London, GB; AN 92-183637 & JP-A-5 032 729

## Beschreibung

Die Erfindung betrifft wäßrige Dispersionen von thermoplastischen Polymerisaten aus Tetrafluorethylen und einem Fluoralkyl-perfluorvinylether, wobei diese Dispersionen einen Feststoffgehalt von über 18 Gew.-% des Fluorpolymers enthalten, welches eine Teilchengröße im Zahlenmittel von höchstens 50 nm aufweisen. Solche Dispersionen eignen sich zur Beschichtung von porösen Substraten.

Bipolymere aus Tetrafluorethylen und 0,5 bis 11 Gew.-% copolymerisierten Einheiten eines Perfluor(alkylvinyl)-ethers der Formel CF₂=CF-OR, worin R ein Perfluoralkylrest mit 1 bis 10 C-Atomen ist, sind aus der EP-B 14 974 bekannt. Wäßrige Dispersionen von Copolymeren aus Einheiten des Tetrafluorethylens und einem Fluoralkyl-perfluorvinylether sind aus WO-A 80/00929 und EP-A 193 963 bekannt, wobei in dem zweitgenannten Dokument angegeben ist, daß die Teilchengröße mit 0,3 bis 1 µm größer als bei üblichen derartigen Polymeren ist. Solche relativ groben Dispersionen eignen sich nicht für die Beschichtung von feinporigen Substraten. Weiterhin ist es aus der US-A 4 391 940 bekannt, Dispersionen von Fluorpolymeren herzustellen, wobei die Partikel aus einem Kern aus modifiziertem Polytetrafluorethylen mit zwei Hüllen bestehen. Bei der Herstellung dieser Partikel wird zunächst eine "Saat" hergestellt, die bis zu 18 Gew.-% Feststoff enthalten kann. Diese Saat-Dispersion besteht überwiegend aus uniformen runden Teilchen mit einem durchschnittlichen Durchmesser von 10 bis 200 nm, vorzugsweise 30 bis 150 nm.

Die Erfindung betrifft demgegenüber wäßrige Dispersionen, die mehr als 18 Gew.-% eines aus der Schmelze verarbeitbaren Bipolymers von Tetrafluorethylen mit Einheiten eines Fluoralkyl-perfluorvinylethers enthalten, wobei die Polymerteilchen im Zahlenmittel höchstens 50 nm groß sind. Weitere Aspekte der Erfindung und bevorzugte Ausführungsformen werden im folgenden näher erläutert.

Der Fluoralkyl-perfluorvinylether entspricht vorzugsweise der Formel X-(CF₂)ₙ-O-CF=CF₂, in der X Wasserstoff, Chlor oder vorzugsweise Fluor und n eine Zahl von 1 bis 8, vorzugsweise von 1 bis 3, ist. Besonders bevorzugt ist der Perfluor-(propyl-vinyl)-ether.

Die Dispersion enthält vorzugsweise 19,5 bis 25 Gew.-%, insbesondere 20 bis 24 Gew.-%, Fluorpolymer.

Die Polymerpartikel in der Dispersion haben im Zahlenmittel vorzugsweise eine Größe von unter 40 nm, beispielsweise 25 ± 10 nm. Eine besondere Ausgestaltung der Erfindung betrifft Dispersionen mit Partikel einer Teilchengröße (im Zahlenmittel) von unter 30 nm, insbesondere 22,5 ± 6 nm.

Die Dispersion kann weitere übliche Bestandteile enthalten, die entweder aus der Polymerisation stammen können oder nachträglich zugesetzt wurden. Art und Menge solcher Zusatzstoffe sind dem Fachmann geläufig.

Die erfindungsgemäßen Dispersionen können in an sich bekannter Weise durch Polymerisation von Tetrafluorethylen mit dem Fluoralkyl-perfluorvinylether in Gegenwart von Initiatoren, insbesondere von anorganischen Peroxiden, und einem Kettenübertragungsmittel, insbesondere Dichlormethan, unter Zusatz üblicher fluorierter Emulgatoren, insbesondere einem Salz der Perfluoroctansäure, hergestellt werden. Vorteilhaft wird der fluorierte Emulgator in etwas höherer als der üblichen Menge zugesetzt, beispielsweise in einer Menge von 0,1 bis 0,15 %, bezogen auf die Masse der Polymerisationsflotte.

Im übrigen wird die Polymerisation in üblicher Weise durchgeführt, also bei Temperaturen von etwa 50 bis etwa 90 °C, vorzugsweise bei etwa 60 bis etwa 80 °C und insbesondere bei etwa 65 bis 70 °C. Der Polymerisationsdruck liegt bei etwa 10 bis etwa 20 bar, vorzugsweise bei etwa 12 bis 15 bar.

Vorteilhaft wird die Polymerisation bis zu dem gewünschten Gehalt an Feststoff fortgeführt, so daß keine Aufkonzentration zu der gewünschten Einsatzkonzentration erforderlich wird. Es ist aber auch möglich, wenn auch im allgemeinen nicht vorteilhaft, die Polymerisation nur bis zu einem geringeren Feststoffgehalt zu führen und dann in üblicher Weise, beispielsweise durch Ultrafiltration oder durch andere schonende Verfahren, gegebenenfalls unter Zusatz von üblichen Stabilisatoren, bis zur gewünschten Einsatzkonzentration aufzukonzentrieren.

Die erfindungsgemäßen Dispersionen eignen sich zum Beschichten poröser Substrate, insbesondere von Oberflächen mit kleinen Porendurchmessern. Man erhält so gut haftende Beschichtungen auch auf Flächen, die mit üblichen Methoden, also nach vorherigem Aufrauhen oder vorherigem Aufbringen von Haftschichten (Primern) überhaupt nicht oder nicht befriedigend auszurüsten sind.

Geeignete Substrate sind Fasermaterialien wie Textilien, Leder, Papier oder Holz, Baustoffe wie Steine, Verputz, Fliesen und dergleichen, metallische Oberflächen, insbesondere oxidierte Metallflächen, und hydrophobe Oberflächen wie beispielsweise Graphit.

Die Erfindung wird in den folgenden Beispielen näher erläutert. Sofern keine anderen Angaben gemacht sind, beziehen sich Prozentangaben auf das Gewicht.

### Beispiel 1

In einem innen emaillierten Polymerisationsreaktor mit einem Gesamtvolumen von 195 l, versehen mit einem Impellerrührer, werden 118 l entsalztes Wasser eingefüllt und darin 2000 g Ammoniumperfluoroctanoat (POA, in Form von 620 g einer 31%igen Lösung in Wasser, Handelsprodukt der Firma 3M) aufgelöst. Nach Abdichten des Reaktors wird zunächst fünfmal mit Stickstoff und anschließend einmal mit 1,0 bar Tetrafluorethylen gespült.

Nach Entspannen und Aufheizen auf 68 °C werden über eine Leitung 50 g Methylenchlorid und 610 g Perfluorpropylperfluorvinylether (PPVE; 0,75 bar) unter mäßigem Rühren eingepumpt. Die Rührung wird dann auf 170 Upm erhöht. Sodann wird dem Reaktor über die Gasphase Tetrafluorethylen (TFE) zugeführt, bis ein Gesamtdruck von 13,4 bar erreicht ist. Daraufhin startet man die Polymerisation durch Zupumpen von 4,0 g Ammoniumpersulfat (APS), gelöst in 300 ml entsalztem Wasser.

Sobald der Druck zu fallen beginnt, werden über die Gasphase weiteres TFE und PPVE gemäß dem Verbrauch ergänzt, so daß der Gesamtdruck von 13,4 bar aufrechterhalten wird. Die freiwerdende Wärme wird durch Kühlung der Kesselwand abgeführt und so eine Temperatur von 68 °C aufrechterhalten.

Nach Einspeisung von 35,7 kg TFE (innerhalb von 4,1 Stunden) in den Reaktor wird die Monomerenzuführung unterbrochen, der Reaktor entspannt und mehrmals mit N₂ gespült.

Die erhaltene Polymer-Dispersion wird am Boden des Reaktors abgelassen. Man erhält 154,5 kg einer Bipolymer-Dispersion mit einem Feststoffgehalt von 23,8 Gew.-%, die einen Gehalt an PPVE von 4,1 Gew.-% (1,54 Mol-%) und einen Melt-Flow-Index (MFI, bestimmt nach DIN 53 735:
Gewichtsauflage 5 kg, 372 °C) von 1,6 aufweist. Der Schmelzpunkt beträgt 305 °C, die Partikelgrößenverteilung 31 nm (Mittelwert der Gewichtsverteilung) und 25 nm (Mittelwert der Anzahlverteilung).

Analog wurden die in der folgenden Tabelle wiedergegebenen Beispiele durchgeführt:

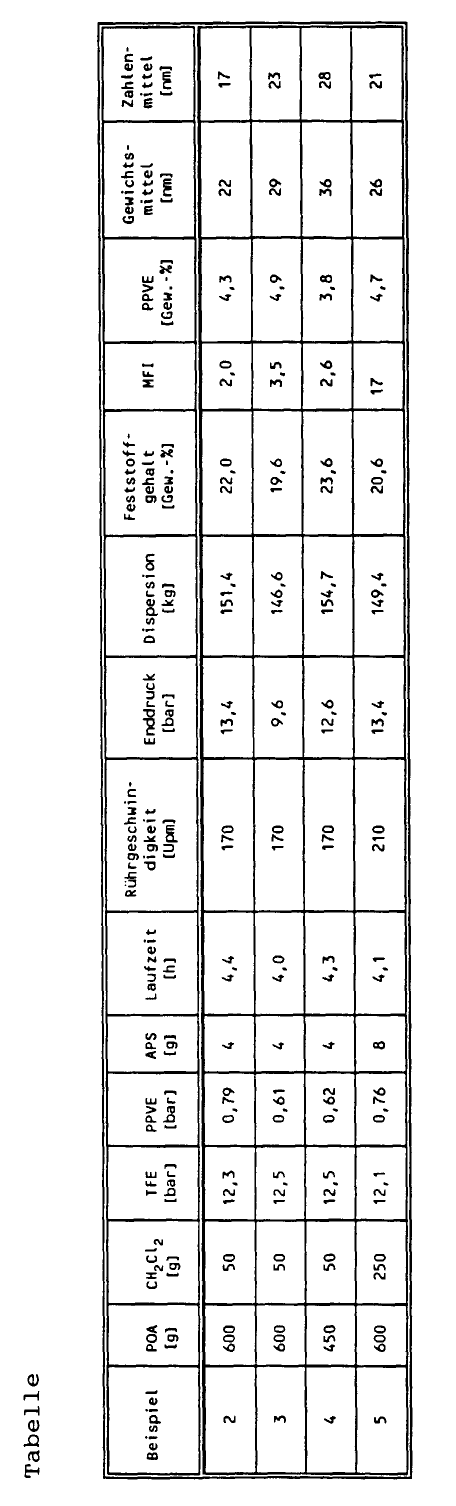

## Patentansprüche

1. Wäßrige Dispersion, enthaltend > 18 Gew.-% eines aus der Schmelze verarbeitbaren Bipolymers aus Einheiten des Tetrafluorethylens und einem Fluoralkyl-perfluorvinylether mit einer Teilchengröße im Zahlenmittel von höchstens 50 nm.

2. Dispersion nach Anspruch 1, enthaltend 19,5 bis 25 Gew.-% des Polymers.

3. Dispersion nach Anspruch 1 oder 2 mit einer Teilchengröße im Zahlenmittel von höchstens 40 nm.

4. Dispersion nach einem oder mehreren der vorhergehenden Ansprüche mit einer Teilchengröße im Zahlenmittel von unter 30 nm.

5. Dispersion nach einem oder mehreren der vorhergehenden Ansprüche, gekennzeichnet durch ein Bipolymer mit Einheiten eines Fluoralkyl-perfluorvinylethers der Formel X-(CF₂)ₙ-O-CF=CF₂, in der X Wasserstoff, Chlor oder Fluor und n 1 bis 8 bedeutet.

6. Dispersion nach Anspruch 5, dadurch gekennzeichnet, daß X für Fluor und n für 1 bis 3 steht.

7. Verwendung der Dispersionen nach einem oder mehreren der vorhergehenden Ansprüche zur Beschichtung von porösen Substraten.

## Revendications

1. Dispersion aqueuse contenant > 18 % en poids d'un bipolymère que l'on peut mettre en oeuvre à l'état fondu, constitué de motifs de tétrafluoréthylène et d'un éther fluoroalkylperfluorovinylique, ayant une granulométrie moyenne en nombre au maximum de 50 nm.

2. Dispersion selon la revendication 1 ayant une teneur de 19,5 à 25 % en poids en le polymère.

3. Dispersion selon la revendication 1 ou 2 ayant une granulométrie moyenne en nombre au maximum 40 nm.

4. Dispersion selon une ou plusieurs des revendications précédentes ayant une granulométrie moyenne en nombre inférieure à 30 nm.

5. Dispersion selon une ou plusieurs des revendications précédentes, caractérisée par un bipolymère comportant des motifs d'un éther fluoroalkylperfluoroalkylvinylique de formule X-(CF₂)ₙ-O-CF=CF₂, dans laquelle X représente l'hydrogène, le chlore ou le fluor et n va de 1 à 8.

6. Dispersion selon la revendication 5 caractérisée en ce que X est le fluor et n va de 1 à 3.

7. Utilisation de la dispersion selon une ou plusieurs des revendications précédentes pour le revêtement de substrats poreux.

## Claims

1. An aqueous dispersion comprising > 18% by weight of a melt-processable bipolymer composed of units of tetrafluoroethylene and a fluoroalkyl perfluorovinyl ether and having a number-average particle size of at most 50 nm.

2. A dispersion as claimed in claim 1, comprising from 19.5 to 25% by weight of the polymer.

3. A dispersion as claimed in claim 1 or 2 having a number-average particle size of at most 40 nm.

4. A dispersion as claimed in one or more of the preceding claims having a number-average particle size of below 30 nm.

5. A dispersion as claimed in one or more of the preceding claims, wherein the bipolymer comprises units of a fluoroalkyl perfluorovinyl ether of the formula X-(CF₂)ₙ-O-CF=CF₂, in which X is hydrogen, chlorine or fluorine and n is from 1 to 8.

6. A dispersion as claimed in claim 5, wherein X is fluorine and n is from 1 to 3.

7. A method of using a dispersion as claimed in one or more of the preceding claims for coating porous substrates.
